# EUROPÄISCHE PATENTSCHRIFT

(11) **EP 3 894 346 B1**
(45) Veröffentlichungstag und Bekanntmachung des Hinweises auf die Patenterteilung: **06.11.2024**
(21) Anmeldenummer: 19783201.7
(22) Anmeldetag: 17.09.2019
(51) Int. Cl.: B65H 49/30, B60J 10/00, B65H 49/32, B23P 19/04

(54) **VERFAHREN ZUR BESCHICKUNG EINER VERARBEITUNGSEINRICHTUNG MIT EINEM DER VERARBEITUNGSEINRICHTUNG ZUZUFÜHRENDEN PROFILSTRANG**
METHOD FOR CHARGING A PROCESSING DEVICE WITH A PROFILE STRAND TO BE FED TO THE PROCESSING DEVICE
PROCÉDÉ D'ALIMENTATION D'UN DISPOSITIF DE TRAITEMENT EN BANDE CONTINUE PROFILÉE À AMENER AU DISPOSITIF DE TRAITEMENT

(30) Priorität: 11.12.2018 DE 102018131673
(43) Veröffentlichungstag der Anmeldung: 20.10.2021
(73) Patentinhaber: CQLT SaarGummi Technologies S.à.r.l., 5544 Remich (LU)
(72) Erfinder: GEBER, Jörg, 66701 Beckingen (DE)
(74) Vertreter: Patentanwälte Bernhardt / Wolff Partnerschaft mbB
(86) Internationale Anmeldenummer: PCT/EP2019/000268
(87) Internationale Veröffentlichungsnummer: WO 2020/119934

(56) Entgegenhaltungen:
- EP-A1- 1 733 839
- WO-A1-2018/071299
- DE-A1- 102004 062 901
- GB-A- 1 102 770
- JP-A- 2001 171 915
- JP-A- H0 691 720
- US-A1- 2009 261 195
- US-A1- 2015 183 616

## Beschreibung

Die Erfindung betrifft ein Verfahren zur Beschickung einer Verarbeitungseinrichtung mit einem der Verarbeitungseinrichtung zuzuführenden Profilstrang, den die Verarbeitungseinrichtung automatisch unter Abtrennung von Strangabschnitten und Verbindung der Strangabschnitte mit einer Fahrzeugkarosserie zu Dichtungen oder Kantenschutzleisten an der Fahrzeugkarosserie verarbeitet, wobei der Profilstrang der Verarbeitungseinrichtung aus einer an den Verarbeitungsort transportierter Liefereinheit unter Abwicklung von einer in der Liefereinheit enthaltenen Wicklung in Stranglängsrichtung zugeführt wird.

Die Erfindung betrifft ferner eine Liefereinheit zur Durchführung des Verfahrens.

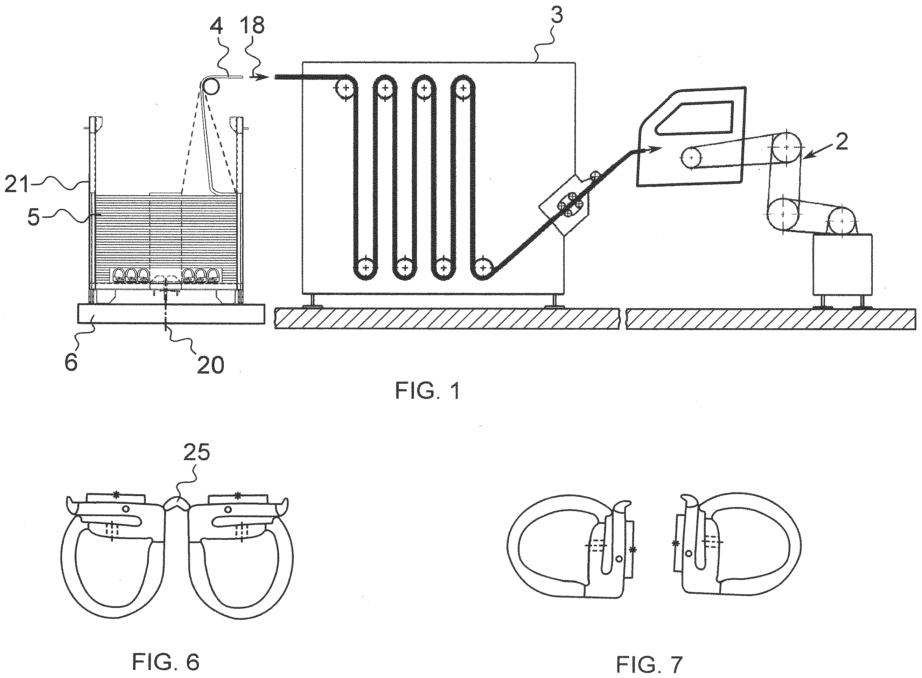

Ein Verfahren der eingangs erwähnten Art geht aus der EP 1 733 839 B2 hervor. Für die Durchführung des Verfahrens beim Strangmaterialhersteller zusammengestellte Liefereinheiten enthalten Dichtungsprofilstränge, die gemäß Fig. 6 paarweise mit einer leicht ablösbaren Verbindungsbrücke 25 extrudiert werden. Die aus der Extrusionsanlage zugeführten Profilstränge werden gemäß Fig. 7 voneinander getrennt und danach auf eine Rolle aufgewickelt. Die dabei entstehenden Liefereinheiten sind (ohne Umspulung des Profilstrangs oder Änderung des Applikationsprozesses der abgetrennten Strangabschnitte) jeweils nur zur Bildung einer Dichtung an der rechten oder der linken Seite der Fahrzeugkarosserie verwendbar. Die Liefereinheiten sind daher entsprechend ihrer Verwendbarkeit zu kennzeichnen.

Aus DE 10 2004 062901 A1, JP H06 91720 A, JP 2001 171915 A, US 2009/261195 A1, GB 1 102 770 A und US 2015/183616 A1 gehen verschiedene Halte- bzw. Wickelvorrichtungen für Schläuche und Kabel hervor.

Der Erfindung liegt die Aufgabe zugrunde, die automatische Fertigung von Dichtungen oder Kantenschutzleisten an Fahrzeugkarosserien aus von einer Liefereinheit zugeführtem Strangmaterial zu erleichtern.

Diese Aufgabe wird bei einem Verfahren der eingangs erwähnten Art dadurch gelöst, dass der Profilstrang wahlweise als rechts an der Fahrzeugkarosserie anzubringendes Rechtsprofil beginnend mit einem der beiden Strangenden oder als links an der Fahrzeugkarosserie anzubringendes Linksprofil beginnend mit dem anderen Strangende abgewickelt wird.

Durch die wahlweise Abwicklung beginnend mit dem einen oder anderen Strangende kann aus ein und derselben Liefereinheit sowohl eine rechte als auch linke Fahrzeugseite mit Dichtungen bzw. Kantenschutzleisten ausgestattet werden. Es bedarf keiner Kennzeichnung der Verwendbarkeit. Die Liefereinheiten enthalten nur den Hinweis, an welchem Strangende ein Rechtsprofil und welchem Strangende ein Linksprofil abwickelbar ist.

Zur Bildung der Wicklung beim Strangmaterialhersteller kann der Profilstrang in bezogen auf eine Wicklungsachse axial oder radial aufeinanderfolgenden Lagen angeordnet werden.

Vorzugsweise wird zur Bildung der Wicklung der Profilstrang lagenweise in zur Wicklungsachse konzentrischen Spiralen angeordnet. Bei Freilegung eines Wicklungsendes kann dann der Strang unter in axialer Richtung lagenweiser Abwicklung aus der Liefereinheit unter Bewegung des abgewickelten Profilstrangs in Stranglängsrichtung herausgeführt werden.

Zur Abwicklung und Zuführung des Profilstrangs zu der Verarbeitungseinheit wird die Wicklung dann vorzugsweise um die Wicklungsachse gedreht. Zweckmäßig erfolgt diese Drehung durch Drehung der gesamten Liefereinheit, z.B. auf einer Drehscheibe.

Es versteht sich, dass die Wicklungsachse in einem solchem Fall vorzugsweise vertikal verläuft und die Wicklungsachse ist zu der Drehachse der Drehscheibe ausgerichtet.

Die Wicklung kann zur Auswahl des Rechts- oder Linksprofils um eine zu der Wicklungsachse senkrechte Achse um 180 ° gedreht werden.

Die Liefereinheit nach der Erfindung weist eine Wicklung auf, die aus einem einzigen, Elastomermaterial aufweisenden Profilstrang aus Elastomermaterial im Form einer Dichtung oder Katenschutzleiste für eine Fahrzeugkarosserie gebildet ist und umfasst eine die Wicklung aufnehmende Wicklungshalterung. Erfindungsgemäß ist die Wicklung in der Wicklungshalterung derart zugänglich, dass der Profilstrang wahlweise beginnend mit dem einen Strangende als rechts an der Fahrzeugkarosserie anzubringendes Rechtsprofil oder anderen Strangende als links an der Fahrzeugkarosserie anzubringendes Linksprofil von der Wicklung abgewickelt und unter Bewegung in Stranglängsrichtung aus der Wicklungshalterung herausgeführt werden kann.

Die Wicklung weist vorzugsweise bezogen auf die Wicklungsachse axial oder radial aufeinanderfolgende Lagen auf.

Die beiden Enden des Profilstrangs sind zweckmäßig an entgegengesetzten radialen Enden der Wicklung oder beide am gleichen axialen Ende der Wicklung angeordnet.

Vorteilhaft weist die Wicklungshalterung an den Enden der Wicklung angeordnete Stirnplatten auf, die vorzugsweise über einen zur Wicklungsachse koaxialen Kern miteinander verbunden sind.

Zur Zugänglichmachung der Wicklung sind die Stirnplatten unter Freilegung der Wicklung an je einem axialen Ende abnehmbar oder weisen verschwenkbare Teile auf.

Entsprechend umfasst die Halterung zur Aufnahme und zum Transport einer Wicklung aus einem vorzugsweise Elastomermaterial aufweisenden Profilstrang vorteilhaft eine Spule mit Stirnplatten und einen die Stirnplatten verbindenden Kern, wobei die Stirnplatten geteilt sind und vorzugsweise verschwenkbare Teile aufweisen.

Zweckmäßig sind die verschwenkbaren Teile an eine Rahmenhalterung für die Spule angelenkt.

Bei den verschwenkbaren Teilen handelt es sich vorzugsweise um Hälftenteile.

Die Teile können durch Verbindungslaschen verbunden sein, welche den geteilten Stirnplatten in ihrer Gesamtheit eine ausreichende Steifigkeit verleihen.

Die Erfindung ist nachfolgend anhand von Ausführungsführungsbeispielen und der beiliegenden, sich auf eines dieser Ausführungsbeispiele beziehenden Zeichnungen weiter erläutert. Es zeigen:
- Fig. 1: eine Anlage zur Herstellung von Dichtungen an Fahrzeugkarosserien unter Zuführung endlosen Strangmaterials,
- Fig. 2: eine in der Anlage von Fig. 1 verwendete, eine Wicklung aus Strang-material enthaltende Liefereinheit nach der Erfindung,
- Fig. 3: die Liefereinheit von Fig. 2 ohne Wicklung,
- Fig. 4: die Liefereinheit von Fig. 2 in perspektivischer Darstellung,
- Fig. 5: die Liefereinheit von Fig. 2 in unterschiedlichen Anordnungen auf einer Drehscheibe, und
- Fig. 6 und 7: Querschnittsdarstellungen von Profilsträngen zur Erläuterung des durch die Erfindung gelösten Problems.

Eine von einem Hersteller von Profilsträngen gelieferte Einheit 1 ist Bestandteil einer bei einem Fahrzeughersteller eingesetzten Fertigungsanlage, die automatisch Dichtungen oder Kantenschutzleisten an einer Fahrzeugkarosserie bildet, z.B. an einer Fahrzeugtür 2. Die Fertigungsanlage umfasst eine Verarbeitungseinrichtung 3, welcher ein der Liefereinheit 1 entnommener Elastomermaterial aufweisender Profilstrang 4 als Endlosstrang (Länge über 1000 m) zugeführt wird. Die Verarbeitungseinrichtung 3 trennt von dem Endlosstrang Strangabschnitte ab und verbindet sie danach, davor oder währendessen mit der Fahrzeugtür 2.

In der Liefereinheit 1 ist der Strang 4 in Form einer Wicklung 5 angeordnet. Zu dessen Abwicklung wird die Liefereinheit 1 durch eine Drehscheibe 6 in ihrer Gesamtheit um eine vertikale Achse 20 gedreht.

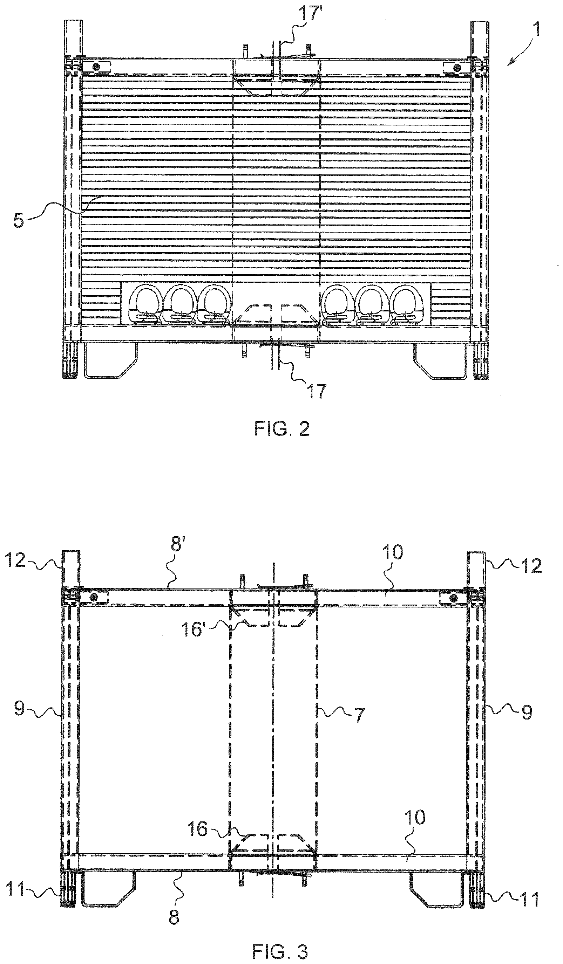

Die in Fig. 2 gesondert dargestellte Liefereinheit 1 umfasst neben obengenannter Wicklung 5 eine Wicklungshalterung, die in dem gezeigten Beispiel einen zylindrischen Kern 7, eine zu dem Kern koaxiale zylindrische Außenwand 21 sowie mit dem zylindrischen Kern 7 verbundene Stirnplatten 8 und 8' aufweist. Die Liefereinheit 1 umfasst ferner ein Rahmengestell mit vier vertikalen Trägerstangen 9 und acht horizontalen Trägerstangen 10. An den unteren vier Ecken des Rahmengestells befindet sich jeweils ein Fußteil 11. Fußteile 12 an den oberen Ecken des Rahmengestell sind jeweils durch Verlängerungen der vertikalen Stangen 9 gebildet. Die Liefereinheiten sind stapelbar, wobei Fußteile 12 eines unteren Rahmengestells jeweils in Eckenaussparungen in den Fußteilen 11 eines oberen Rahmengestells eingreifen.

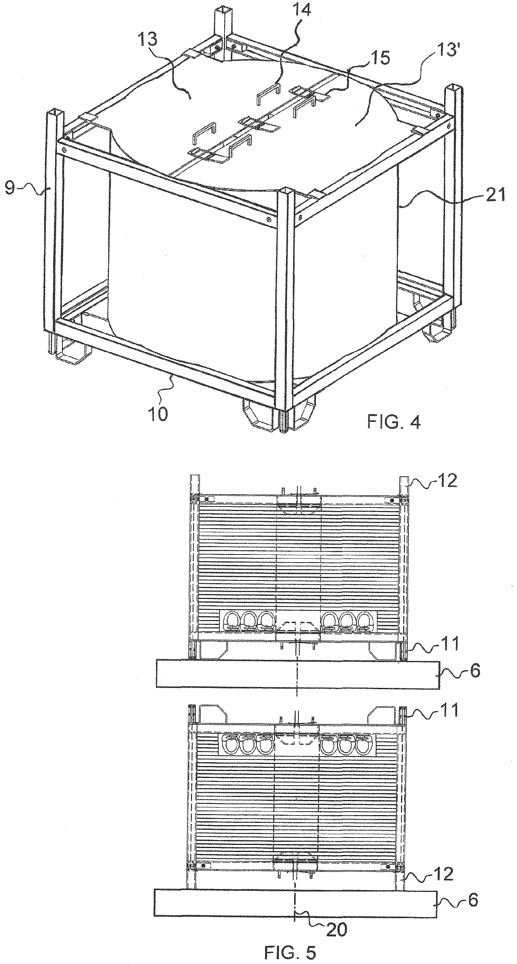

Wie insbesondere Fig. 4 erkennen lässt, sind die Stirnplatten 8,8' geteilt und Hälftenteile 13,13' sind verschwenkbar an einander gegenüberliegenden horizontalen Stangen 10 des Rahmengestells angelenkt. Vier Handgriffe 14 ermöglichen eine bequeme Verschwenkung der Hälftenteile 13,13'. Drei Verschlusslaschen 15 sorgen für eine steife Verbindung der Hälftenteile 13,13' und damit ausreichende Steifigkeit der durch die Hälftenteile gebildeten Stirnplatten 8,8' in ihrer Gesamtheit.

Wie insbesondere Fig. 3 erkennen lässt, sind die Stirnplatten 8,8' innseitig jeweils mit einem (geteilten) Konus 16,16' verbunden, welcher in einen zylindrischen Endteil übergeht und jeweils kraftschlüssig in den hohl ausgebildeten Kern 7 eingreift, so dass der Kern 7 fest mit den Stirnplatten 8,8' verbunden ist.

Zur Zusammenstellung der Liefereinheit 1 beim Hersteller des die Wicklung 5 bildenden Profilstrangs 4 wird der Profilstrang 4, dessen Länge beispielsweise 1500 m beträgt, unter Zuführung spiralförmiger, axial aufeinanderfolgenden Lagen auf der Innenseite einer der Stirnplatten 8,8' abgelegt. Zu diesem Zweck wird das Rahmengestell mit der Wicklungshalterung mittels einer Drehscheibe, wie sie in Fig. 1 gezeigt ist, in seiner Gesamtheit um die Zylinderachse des Kerns 7 gedreht und der unter Bewegung in Stranglängsrichtung zugeführte Profilstrang 4 unter Umlenkung in zu dem Kern 7 konzentrischen Spiralen durch z.B. einen Roboterarm gleitend abwechselnd von innen nach außen und von außen nach innen geführt. Ist der vorgesehene, durch die zylindrische Außenwand 21 begrenzte Außendurchmesser der Wicklung erreicht, wird die Führungsbewegung des Roboterarms jeweils umgekehrt, bis der durch den Durchmesser des Kerns 7 bestimmte Innendurchmesser der Wicklung erreicht ist. Auf diese Weise entstehen die axial aufeinanderfolgenden Lagen des gewickelten Profilstrangs 4 in Spiralenform.

Bei Beginn der Wicklungsbildung wird darauf geachtet, dass das betreffende Strangende 17 des Profilstrangs 4 freiliegt und für eine Abwicklung greifbar ist. In gleicher Weise wird bei Abschluss der Wicklung dafür gesorgt, dass auch von dem anderen Wicklungsende ein greifbares Strangende 17' vorsteht.

Die so komplettierte Liefereinheit 1 wird dem Fahrzeughersteller zugeliefert, wo sie Bestandteil der anhand von Fig. 1 beschriebenen Fertigungsanlage wird.

Je nachdem ob z.B. Dichtungen für rechte oder linke Türen 2 gefertigt werden sollen, wird die Liefereinheit 1 entweder mit den Füßen 11 oder den Füßen 12 auf der Drehscheibe 6 abgesetzt. Nach Öffnung der Verschlusslaschen 15 werden die Hälftenteile 13,13' der betreffende Stirnplatte 8 bzw. 8' gemäß Fig. 1 nach oben verschwenkt, so dass die Wicklung 5 zugänglich ist. Über das betreffende vorstehende Ende 17 bzw. 17' wird eine Verbindung mit der Verarbeitungseinrichtung 3 hergestellt, wobei die Verarbeitungseinrichtung 3 eine nicht gezeigte Zugeinrichtung Zugkraft auf den Strang 4 gemäß Pfeil 18 ausübt.

Es versteht sich, dass die Verarbeitungseinrichtung 3 den Profilstrang 4 über Pufferschleifen führen kann, durch die sich bei der Abwicklung (bei konstanter Drehgeschwindigkeit der Drehscheibe 6) ergebenden unterschiedlichen Strangabzugsgeschwindigkeiten in Stranglängsrichtung ausgleichen lassen.

Es versteht sich, dass der Kern 7 nicht als vollständiger Hohlzylinder ausgebildet zu sein braucht, sondern lediglich durch entsprechend dessen Mantelfläche angeordnete Stützstäbe ausgebildet sein könnte. In letzterem Fall kann die entleerte Liefereinheit für einen effizienten Rücktransport platzsparend zusammengelegt werden.

## Patentansprüche

1. Verfahren zur Beschickung einer Verarbeitungseinrichtung (3) mit einem der Verarbeitungseinrichtung (3) zuzuführenden Profilstrang (4), den die Verarbeitungseinrichtung (3) automatisch unter Abtrennung von Strangabschnitten und Verbindung der Strangabschnitte mit einer Fahrzeugkarosserie (2) zu Dichtungen oder Kantenschutzleisten an der Fahrzeugkarosserie (2) verarbeitet, wobei der Profilstrang (4) der Verarbeitungseinrichtung (5) aus einer an den Verarbeitungsort transportierten Liefereinheit (1) unter Abwicklung von einer in der Liefereinheit enthaltenen Wicklung (5) in Stranglängsrichtung zugeführt wird,
**dadurch gekennzeichnet,**
**dass** der Profilstrang (4) wahlweise als rechts an der Fahrzeugkarosserie anzubringendes Rechtsprofil beginnend mit einem der beiden Strangenden (17,17') oder als links an der Fahrzeugkarosserie anzubringendes Linksprofil beginnend mit dem anderen Strangende (17,17') abgewickelt wird.

2. Verfahren nach Anspruch 1,
**dadurch gekennzeichnet,**
**dass** zur Bildung der Wicklung (5) der Profilstrang (4) in bezogen auf eine Wicklungsachse axial oder radial aufeinanderfolgenden Lagen angeordnet wird.

3. Verfahren nach Anspruch 2,
**dadurch gekennzeichnet,**
**dass** zur Bildung der Wicklung (5) der Profilstrang (4) lagenweise in zur Wicklungsachse konzentrischen Spiralen angeordnet wird.

4. Verfahren nach einem der Ansprüche 1 bis 3,
**dadurch gekennzeichnet,**
**dass** die Wicklung (5) zur Abwicklung und Zuführung des Profilstrangs (4) zu der Verarbeitungseinrichtung (3) um die Wicklungsachse gedreht wird.

5. Verfahren nach Anspruch 4,
**dadurch gekennzeichnet,**
**dass** die Wicklung (5) zur Auswahl des Rechts- oder Linksprofils um 180 ° um eine zur Wicklungsachse senkrechte Achse gedreht wird.

6. Liefereinheit (1) mit einer durch einen einzigen Profilstrang (4) aus Elastomermaterial in Form einer Dichtung oder Kantenschutzleiste für eine Fahrzeugkarosserie gebildeten Wicklung (5) und einer die Wicklung (5) aufnehmenden Wicklungshalterung (21),
**dadurch gekennzeichnet,**
**dass** die Wicklung (5) in der Wicklungshalterung (21) zugänglich ist, um den Profilstrang (4) wahlweise beginnend mit dem einen Strangende als rechts an der Fahrzeugkarosserie anzubringendes Rechtsprofil oder anderen Strangende als links an der Fahrzeugkarosserie anzubringendes Linksprofil von der Wicklung (5) abzuwickeln und unter Bewegung in Stranglängsrichtung von der Wicklungshalterung (21) abzuführen.

7. Liefereinheit nach Anspruch 6,
**dadurch gekennzeichnet,**
**dass** die Wicklung (5) bezogen auf eine Wicklungsachse axial oder radial aufeinanderfolgende Lagen aufweist.

8. Liefereinheit nach Anspruch 7,
**dadurch gekennzeichnet,**
**dass** die beiden Ende des Profilstrangs (4) an entgegengesetzten axialen Enden der Wicklung (5) oder beide am gleichen axialen Ende der Wicklung (5) angeordnet sind.

9. Liefereinheit nach Anspruch 7 oder 8,
**dadurch gekennzeichnet,**
**dass** die Wicklungshalterung (21) an axialen Enden der Wicklung (5) angeordnete Stirnplatten (8,8') aufweist, die vorzugsweise über einen zur Wicklungsachse koaxialen Kern (7) miteinander verbunden sind.

10. Liefereinheit nach einem der Ansprüche 6 bis 9,
**dadurch gekennzeichnet,**
**dass** die Wicklungshalterung (21) zur Zugänglichmachung der Wicklung (5) bewegbare oder/und abnehmbare Teile aufweist.

11. Liefereinheit nach Anspruch 9 oder 10,
**dadurch gekennzeichnet,**
**dass** die Stirnplatten (8,8') zur Freilegung der Wicklung (5) wahlweise an einem axialen Ende bewegbare Teile (13,13'), vorzugsweise verschwenkbare Teile (13,13'), aufweist.

## Claims

1. Method for charging a processing device (3) with a profile strand (4) which is to be fed to the processing device (3) and which the processing device (3), by severing strand portions and connecting the strand portions to a vehicle body (2), automatically processes to form seals or edge protection strips on the vehicle body (2), wherein the profile strand (4) is fed in the strand longitudinal direction to the processing device (5) from a delivery unit (1) transported to the processing location while being unwound from a winding (5) contained in the delivery unit, **characterized**
**in that** the profile strand (4) is selectively unwound as a right-hand profile, which is to be applied to the vehicle body on the right, beginning with one of the two strand ends (17, 17'), or as a left-hand profile, which is to be applied to the vehicle body on the left, beginning with the other strand end (17, 17').

2. Method according to Claim 1,
**characterized**
**in that**, for forming the winding (5), the profile strand (4) is arranged in axially or radially successive layers relative to a winding axis.

3. Method according to Claim 2,
**characterized**
**in that**, for forming the winding (5), the profile strand (4) is arranged in layers, in spirals which are concentric with the winding axis.

4. Method according to one of Claims 1 to 3, **characterized**
**in that**, for unwinding and feeding the profile strand (4) to the processing device (3), the winding (5) is rotated about the winding axis.

5. Method according to Claim 4,
**characterized**
**in that**, for selecting the right-hand or left-hand profile, the winding (5) is rotated by 180° about an axis perpendicular to the winding axis.

6. Delivery unit (1) comprising a winding (5), which is formed by a single profile strand (4) made of elastomer material in the form of a seal or edge protection strip for a vehicle body, and comprising a winding holder (21) receiving the winding (5), **characterized**
**in that** the winding (5) is accessible in the winding holder (21) in order to unwind the profile strand (4) from the winding (5) selectively as a right-hand profile, which is to be applied to the vehicle body on the right, beginning with the one strand end, or as a left-hand profile, which is to be applied to the vehicle body on the left, beginning with the other strand end, and to guide the profile strand away from the winding holder (21) while being moved in the strand longitudinal direction.

7. Delivery unit according to Claim 6,
**characterized**
**in that** the winding (5) has axially or radially successive layers relative to a winding axis.

8. Delivery unit according to Claim 7,
**characterized**
**in that** the two ends of the profile strand (4) are arranged at opposing axial ends of the winding (5) or both ends are arranged at the same axial end of the winding (5).

9. Delivery unit according to Claim 7 or 8, **characterized**
**in that** the winding holder (21) has end plates (8, 8') which are arranged at axial ends of the winding (5) and which are preferably connected together via a core (7) which is coaxial with the winding axis.

10. Delivery unit according to one of Claims 6 to 9, **characterized**
**in that** the winding holder (21) has movable or/and removable parts for making the winding (5) accessible.

11. Delivery unit according to Claim 9 or 10, **characterized**
**in that** the end plates (8, 8') have movable parts (13, 13'), preferably pivotable parts (13, 13'), selectively at one axial end for exposing the winding (5).

## Revendications

1. Procédé d'alimentation d'un dispositif de traitement (3) en un cordon profilé (4) à amener au dispositif de traitement (3), cordon profilé que le dispositif de traitement (3) traite automatiquement en séparant des tronçons de cordon et en reliant les tronçons de cordon à une carrosserie de véhicule (2) pour en former des joints d'étanchéité ou des baguettes de protection de bord sur la carrosserie de véhicule (2), le cordon profilé (4) étant amené au dispositif de traitement (5) à partir d'une unité de livraison (1), transportée sur le lieu de traitement, en le déroulant d'un enroulement (5), contenu dans l'unité de livraison, dans le sens longitudinal du cordon,
**caractérisé en ce que**
le cordon profilé (4) est déroulé au choix comme profilé à droite, à monter à droite sur la carrosserie du véhicule, en commençant par l'une des deux extrémités de cordon (17, 17') ou comme profilé à gauche, à monter à gauche sur la carrosserie du véhicule, en commençant par l'autre extrémité de cordon (17, 17').

2. Procédé selon la revendication 1,
**caractérisé en ce que**
pour former l'enroulement (5), le cordon profilé (4) est agencé en couches successives axiales ou radiales par rapport à un axe d'enroulement.

3. Procédé selon la revendication 2,
**caractérisé en ce que**
pour former l'enroulement (5), le cordon profilé (4) est agencé par couches en spirales concentriques à l'axe d'enroulement.

4. Procédé selon l'une des revendications 1 à 3,
**caractérisé en ce que**
pour dérouler et amener le cordon profilé (4) au dispositif de traitement (3), l'enroulement (5) est tourné autour de l'axe d'enroulement.

5. Procédé selon la revendication 4,
**caractérisé en ce que**
pour sélectionner le profilé à droite ou à gauche, l'enroulement (5) est tourné de 180° autour d'un axe perpendiculaire à l'axe d'enroulement.

6. Unité de livraison (1) comprenant un enroulement (5), formé par un seul cordon profilé (4) en matériau élastomère sous la forme d'un joint d'étanchéité ou d'une baguette de protection de bord pour une carrosserie de véhicule, et un support d'enroulement (21) recevant l'enroulement (5), **caractérisée en ce que**
l'enroulement (5) est accessible dans le support d'enroulement (21) pour dérouler le cordon profilé (4) de l'enroulement (5) en commençant au choix par une extrémité du cordon à titre de profilé à droite, à monter à droite sur la carrosserie du véhicule, ou par l'autre extrémité de cordon à titre de profilé à gauche, à monter à gauche sur la carrosserie de véhicule, et pour l'évacuer du support d'enroulement (21) en le déplaçant dans le sens longitudinal du cordon.

7. Unité de livraison selon la revendication 6,
**caractérisée en ce que**
l'enroulement (5) présente des couches successives axiales ou radiales par rapport à un axe d'enroulement.

8. Unité de livraison selon la revendication 7,
**caractérisée en ce que**
les deux extrémités du cordon profilé (4) sont disposées à des extrémités axiales opposées de l'enroulement (5) ou sont disposées toutes deux à la même extrémité axiale de l'enroulement (5).

9. Unité de livraison selon la revendication 7 ou 8,
**caractérisée en ce que**
le support d'enroulement (21) comprend des plaques frontales (8, 8') disposées aux extrémités axiales de l'enroulement (5), qui sont de préférence reliées entre elles par un noyau (7) coaxial à l'axe d'enroulement.

10. Unité de livraison selon l'une des revendications 6 à 9,
**caractérisée en ce que**
le support d'enroulement (21) comprend des parties mobiles ou/et amovibles pour permettre l'accès à l'enroulement (5).

11. Unité de livraison selon la revendication 9 ou 10,
**caractérisée en ce que**
pour dégager l'enroulement (5) au choix à une extrémité axiale, les plaques frontales (8, 8') présentent des parties (13, 13') mobiles, de préférence des parties (13, 13') pivotantes.
